# EUROPÄISCHE PATENTANMELDUNG

(11) **EP 1 712 432 A2**
(43) Veröffentlichungstag der Anmeldung: **18.10.2006**
(21) Anmeldenummer: 06006086.0
(22) Anmeldetag: 24.03.2006
(51) Int. Cl.: B60R 21/239

(54) **Gassackmodul mit Abströmeinrichtung**

(30) Priorität: 12.04.2005 DE 202005005797 U
(71) Anmelder: TRW Automotive Safety Systems GmbH, 63743 Aschaffenburg (DE)
(72) Erfinder: Helmstetter, Matthias, 63743 Aschaffenburg (DE)
(74) Vertreter: Strass, Jürgen

(57) **Zusammenfassung**

Ein Gassackmodul für ein Fahrzeuginsassen-Rückhaltesystem umfaßt einen Gassack (12) und eine Abströmeinrichtung (18). Die Abströmeinrichtung weist eine mittels einer Steuerung (19) aktivierbare Einheit (26) zur selektiven Bereitstellung einer Abströmöffnung auf. Die aktivierbare Einheit (26) ist an einer Aufnahme (24) angebracht, die bei Aktivierung der Einheit (18) eine Scharnierfunktion ausübt.

## Beschreibung

Die Erfindung betrifft ein Gassackmodul für ein Fahrzeuginsassen-Rückhaltesystem, mit einem Gassack und einer Abströmeinrichtung, die eine mittels einer Steuerung aktivierbare Einheit zur selektiven Bereitstellung einer Abströmöffnung aufweist.

Abströmöffnungen erlauben eine Verringerung des Gassackinnendrucks, was in bestimmten Rückhaltefällen sinnvoll ist. Inzwischen sind zahlreiche Möglichkeiten bekannt, den Innendruck und damit die Rückhaltewirkung des Gassacks durch selektive Freigabe einer Abströmöffnung zu beeinflussen.

Ein Gassackmodul der eingangs genannten Art, bei dem ein Abströmbereich in der Gassackwand geöffnet werden kann, ist aus der WO-A-2004/045919 bekannt. Eine pyrotechnische Ladung in Form einer Sprengschnur ist direkt auf dem Abströmbereich angebracht, so daß der Abströmbereich nach Zündung der Sprengschnur durchbrennt oder mechanisch aufgerissen wird.

Sprengschnüre zur Erzeugung von Abströmöffnungen werden auch bei dem aus der GB-A-2329364 bekannten Gassackmodul verwendet. Hier werden bestimmte Bereiche eines Reaktionsbehälters, eines Manifolds oder eines Gasgenerators durchgebrannt.

Bei dem in der GB-A-2306409 gezeigten Gassackmodul ist eine Abströmöffnung des Gassacks durch eine Scheibe verschlossen. Eine auf der Scheibe angeordnete pyrotechnische Ladung brennt einen geschwächten Abschnitt der Scheibe durch, so daß eine Klappe gebildet wird. Die Klappe kann sich durch den Gassackinnendruck öffnen und die Abströmöffnung freigeben.

Die Erfindung schafft ein Gassackmodul, das eine gezielte Freigabe einer Abströmöffnung auf zuverlässige Weise ermöglicht.

Gemäß der Erfindung ist bei einem Gassackmodul der eingangs genannten Art vorgesehen, daß die aktivierbare Einheit an einer Aufnahme angebracht ist, die bei Aktivierung der Einheit eine Scharnierfunktion ausübt. Die Aufnahme sorgt einerseits für eine sichere Positionierung der aktivierbaren Einheit und ermöglicht andererseits ein Wegklappen, um so die Abströmöffnung freizugeben und das abströmende Gas nicht zu behindern. Die Aufnahme gibt auch die Richtung und den Bereich vor, in der/dem die aktivierbare Einheit ihre Wirkung entfaltet.

Eine bevorzugte Konstruktion der Abströmeinrichtung sieht vor, daß die Aufnahme einen Scharnierbereich und einen Schwenkabschnitt aufweist, auf dem die aktivierbare Einheit befestigt ist. Der Scharnierbereich erlaubt ein Wegklappen des Schwenkabschnitts mit der aktivierbaren Einheit, so daß nach der Bereitstellung der Abströmöffnung ein ungehindertes Abströmen des Gases gewährleistet ist.

Die Abströmeinrichtung kann an einem starren Bauteil des Gassackmoduls angeordnet sein. Bevorzugt ist jedoch die Anordnung der Abströmeinrichtung an einer Wand des Gassacks.

Gemäß einer Weiterbildung der Erfindung sind bestimmte Bereiche des an die Abströmeinrichtung angrenzenden Gassackgewebes geschwächt.

Vorzugsweise sind die geschwächten Bereiche so auf die aktivierbare Einheit abgestimmt, daß bei Aktivierung der Einheit das Gassackgewebe in den geschwächten Bereichen aufreißt. Die geschwächten Bereiche definieren somit im wesentlichen Form und Größe der Abströmöffnung.

Bei einer Konstruktion der Abströmeinrichtung mit einem Scharnierbereich und einem Schwenkabschnitt ist es zweckmäßig, die geschwächten Bereiche nur auf einer Seite des Scharnierbereichs vorzusehen, nämlich auf der Seite des Schwenkabschnitts.

Gemäß einer bevorzugten Ausführungsform der Erfindung sind die geschwächten Bereiche durch Austrittsöffnungen gebildet. Somit stehen neben der aktiv steuerbaren Abströmöffnung auch passive Austrittsöffnungen zur Verfügung. Bei einer solchen Kombination kann in Abhängigkeit geeigneter Parameter entschieden werden, ob eine Freigabe der Abströmöffnung zusätzlich zu den passiven Austrittsöffnungen sinnvoll ist.

Besonders vorteilhaft ist die Gestaltung der Austrittsöffnungen so, daß sich der effektive Querschnitt der Austrittsöffnungen bei steigendem Innendruck des Gassacks vergrößert. Die passiven Austrittsöffnungen passen sich dann automatisch an die Intensität des Aufpralls an, die vor allem von der Größe und dem Gewicht des Fahrzeuginsassen abhängt. Die Abströmöffnung kann unter bestimmten Umständen, wie etwa bei hoher Geschwindigkeit oder geringem Abstand des Fahrzeuginsassen vom Gassack, zusätzlich freigegeben werden, um einen schnellen Abbau des Gassackinnendrucks zu ermöglichen.

Die Integration der elektrischen Zuleitungen mit denen die Abströmeinrichtung mit der Steuerung verbunden ist, in das Gassackgewebe hat den Vorteil, daß die Zuleitungen vor und während der Entfaltung des Gassacks geschützt sind. Die Zuleitungen können hierzu beispielsweise zwischen zwei Gewebelagen eingeklebt, eingeschweißt, eingenäht oder eingewebt werden.

Als aktivierbare Einheit bietet sich eine pyrotechnische Einheit mit einer Explosivladung an. Solche Einheiten sind in vielfältigen Anwendungen bewährt.

Alternativ kann die aktivierbare Einheit aber auch ein elektrorheologisches Fluid aufweisen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 ein erfindungsgemäßes Gassackmodul mit einem entfalteten Gassack im Belastungsfall;
- Figur 2 eine Außenansicht eines Ausschnitts der Gassackwand;
- Figur 3 eine Innenansicht des Ausschnitts aus Figur 2;
- Figur 4 eine perspektivische Schnittansicht entlang der Linie IV-IV in Figur 2;
- Figur 5 eine perspektivische Schnittansicht entlang der Linie V-V in Figur 3;
- Figur 6 eine Ansicht entsprechend Figur 2 mit alternativ gestalteten passiven Austrittsöffnungen;
- Figur 7 eine alternative Ausführungsform der Abströmeinrichtung in einer Ansicht entsprechend Figur 3;
- Figur 8 eine Draufsicht auf eine Abströmeinrichtung gemäß einer weiteren Ausführungsform der Erfindung;
- Figur 9 eine Unteransicht der Abströmeinrichtung aus Figur 8;
- Figur 10 eine perspektivische Schnittansicht entlang der Linie X-X in Figur 8; und
- Figur 11 eine perspektivische Schnittansicht entlang der Linie XI-XI in Figur 9.

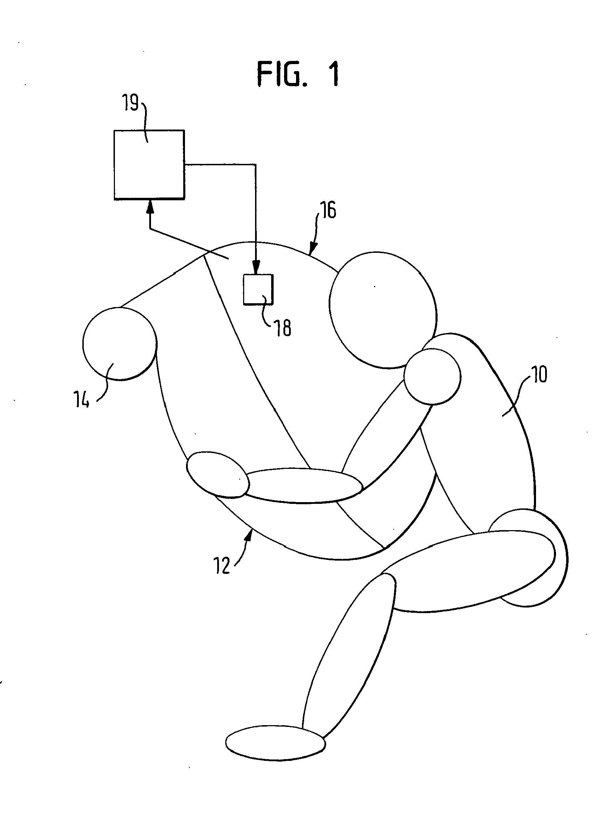

In Figur 1 ist ein Fahrzeuginsasse 10 dargestellt, der in einen aufgeblasenen Gassack 12 eines Fahrzeuginsassen-Rückhaltesystems eintaucht. Der Gassack 12, der sich aus dem Gehäuse eines Gassackmoduls 14 heraus entfaltet hat, hat eine Gassackwand 16, an der eine mittels einer Steuerung 19 elektrisch ansteuerbare Abströmeinrichtung 18 angeordnet ist. Die Abströmeinrichtung 18 dient zur selektiven Bereitstellung einer Abströmöffnung, durch die Gas aus dem Gassack 12 entweichen kann.

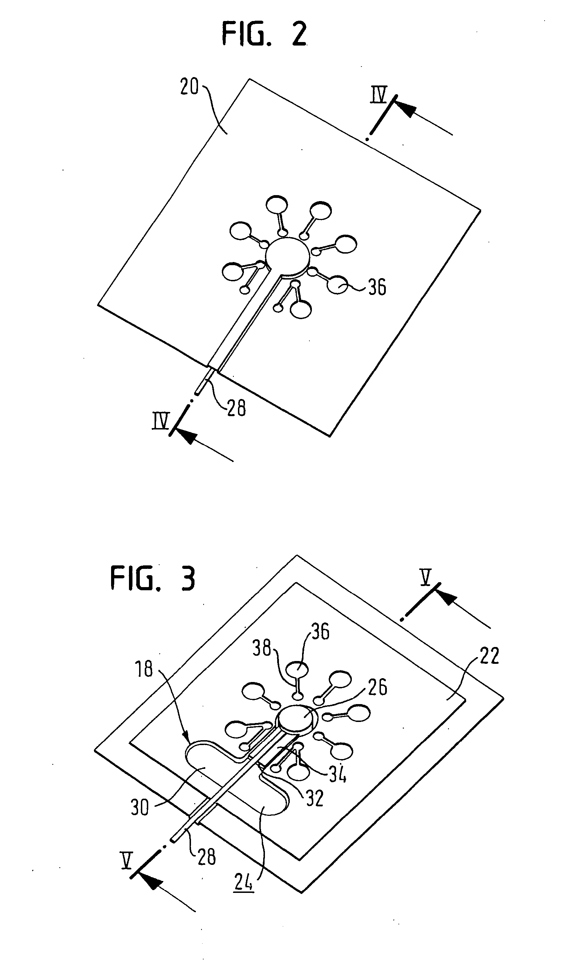

In den Figuren 2 bis 5 ist eine erste Ausführungsform der Erfindung dargestellt. Die Wand des Gassacks 12 weist eine äußere Gewebelage 20 und eine innere Gewebelage 22 auf. An einer geeigneten Stelle der Gassackwand ist zwischen den beiden Gewebelagen 20, 22 die Abströmeinrichtung 18 angebracht. Die Abströmeinrichtung 18 weist im wesentlichen eine Aufnahme 24, eine aktivierbare Einheit in Form einer pyrotechnischen Ladung 26 mit Zünder (Squib) und elektrische Zuleitungen 28 auf, die die Abströmeinrichtung 18 mit der Steuerung 19 verbinden. Die Befestigung der Abströmeinrichtung 18 kann durch Kleben, Pressen, Schweißen, Einnähen, Einweben oder dergl. erfolgen. Die elektrischen Zuleitungen 28 sind durch ihre Integration in das Gassackgewebe jederzeit geschützt.

Die Aufnahme 24 besteht im wesentlichen aus einer Metall- oder Kunststoffplatte, die einen länglichen Abschnitt 30, einen Scharnierbereich 32 in Form eines Filmscharniers und einen Schwenkabschnitt 34 aufweist. Die pyrotechnische Ladung 26 ist auf der dem Gassackinneren zugewandten Seite des Schwenkabschnitts 34 befestigt.

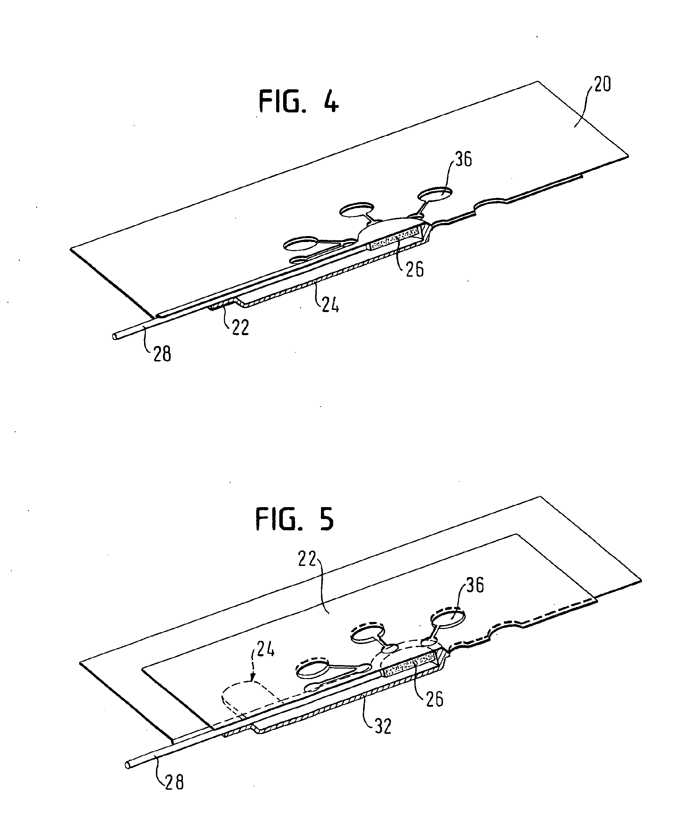

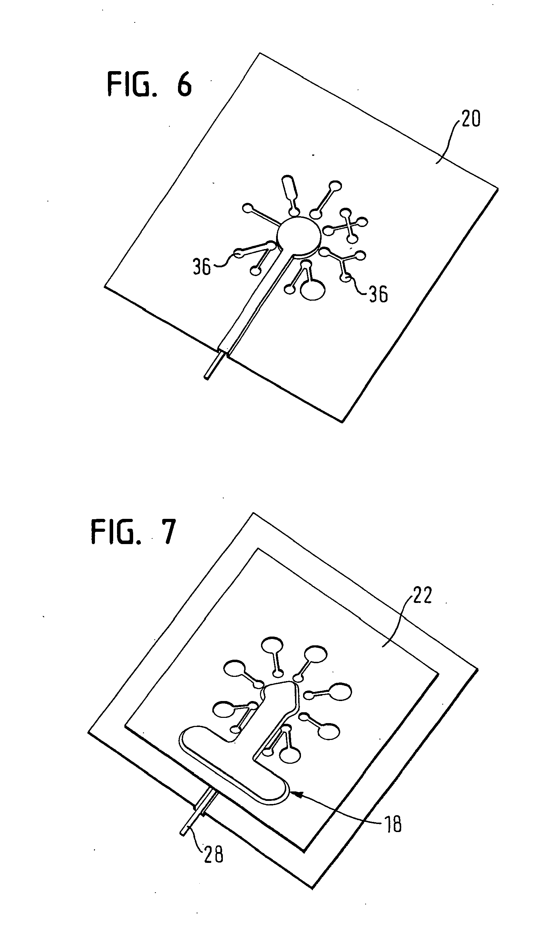

Bestimmte Bereiche des an die Abströmeinrichtung 18 angrenzenden Gassackgewebes sind geschwächt. Bei der dargestellten Ausführungsform sind die geschwächten Bereiche als passive Austrittsöffnungen 36 ausgeführt. Die Austrittsöffnungen 36 sind um den Schwenkabschnitt 34 der Aufnahme 24 herum angeordnet und teilweise durch Schlitze 38 miteinander verbunden, so daß der effektive Austrittsquerschnitt der Austrittsöffnungen 36 variabel ist. Die Austrittsöffnungen 36 bzw. deren effektive Austrittsquerschnitte können aber auch anders als in den Figuren 2 und 3 gestaltet sein. In Figur 6 sind einige Beispiele für alternative Geometrien gezeigt.

In einem Rückhaltefall wird der Gassack 12 in bekannter Weise aufgeblasen. Bei einem Aufprall hoher Intensität wird die Abströmeinrichtung 18 nicht aktiviert. In diesem Fall bestimmen alleine die passiven Austrittsöffnungen 36 den Druck im Inneren des Gassacks 12 und damit die Rückhaltewirkung. Die passiven Austrittsöffnungen 36 können als dynamische Öffnungen bezeichnet werden, da sich bei höherem Innendruck ihr effektiver Austrittsquerschnitt vergrößert. Dies ergibt sich dadurch, daß die an die Schlitze 38 angrenzenden Abschnitte des Gassackgewebes stärker aufklappen, so daß mehr Gas austreten kann.

Wie eingangs erwähnt, ist es in bestimmten Situationen jedoch sinnvoll, den Gassackinnendruck möglichst schnell zu reduzieren. Die Steuerung 19 aktiviert dann die Abströmeinrichtung 18, indem die pyrotechnische Ladung 26 gezündet wird. Die geschwächten Bereiche des Gassackgewebes sind in ihrer Anordnung und Dimensionierung so auf die pyrotechnische Ladung 26 abgestimmt, daß durch die Explosion das Gassackgewebe in diesen Bereichen aufreißt. Die Anordnung der pyrotechnischen Ladung 26 auf der dem Gassackinneren zugewandten Seite sorgt dafür, daß der Schwenkabschnitt 34 der Aufnahme 24 um eine durch den Scharnierbereich 32 vorgegebene Achse nach außen wegklappt. Das Wegklappen nach außen wird zudem durch den Gassackinnendruck unterstützt. Somit steht eine Abströmöffnung mit großem Querschnitt zur Verfügung, durch die in kurzer Zeit eine große Menge Gas entweichen kann.

Figur 7 zeigt eine zweite Ausführungsform der Erfindung. Die Abströmeinrichtung 18 weist hier anstelle der pyrotechnischen Ladung und des Zünders ein elektrorheologisches Fluid auf. Durch Anlegen einer elektrischen Spannung an das Fluid ändert dieses innerhalb weniger Millisekunden seine Eigenschaften. Diese Änderung kann zur Bereitstellung der Abströmöffnung genutzt werden.

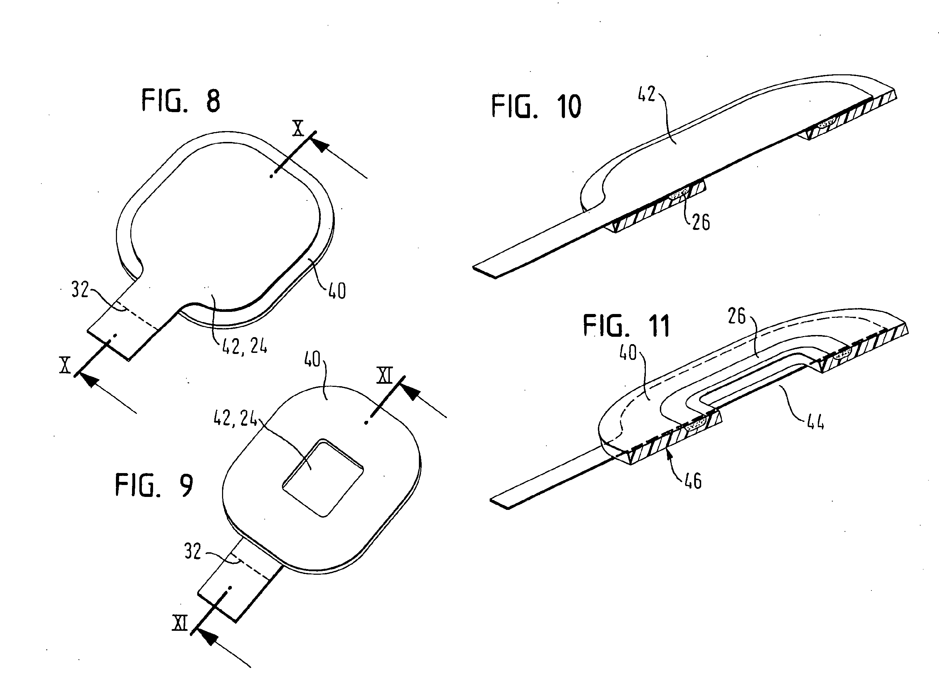

In den Figuren 8 bis 11 ist ein weiteres Beispiel für die Ausführung der Abströmeinrichtung 18 gezeigt. Die Einrichtung 18 umfaßt ein Gehäuse, das z.B. aus Kunststoff gebildet sein kann, mit einem Unterteil 40 und einem Oberteil 42. Das Oberteil 42 dient hier als Aufnahme für die aktivierbare Einheit und weist den Scharnierbereich 32 auf. Das Unterteil 40 hat eine mittige Aussparung 44, die im Aktivierungsfall der bereitgestellten Abströmöffnung entspricht. Um die Aussparung 44 herum ist ein schichtartig aufgetragenes Elektrolyt oder eine pyrotechnische Ladung 26 als aktivierbare Einheit angeordnet. Die aktivierbare Einheit befindet sich zwischen dem Unterteil 40 und dem Oberteil 42, die z.B. durch Ultraschallschweißen miteinander verbunden sind. Das Gehäuse der Abströmeinrichtung 18 mit der aktivierbaren Einheit ist wenigstens an der mit 46 bezeichneten Stelle an bzw. in den Gasgeneratorträger des Gassackmoduls oder das Gassackgewebe geklebt, genäht oder mechanisch fixiert (z.B. durch Pressung). Die Abströmeinrichtung 18 gemäß den Figuren 8 bis 11 hat den Vorteil, daß sie als vormontierbare Einheit universell verbaut werden kann.

## Patentansprüche

1. Gassackmodul für ein Fahrzeuginsassen-Rückhaltesystem, mit einem Gassack (12) und einer Abströmeinrichtung (18), die eine mittels einer Steuerung (19) aktivierbare Einheit (26) zur selektiven Bereitstellung einer Abströmöffnung aufweist, **dadurch gekennzeichnet, daß** die aktivierbare Einheit (26) an einer Aufnahme (24) angebracht ist, die bei Aktivierung der Einheit (26) eine Scharnierfunktion ausübt.

2. Gassackmodul nach Anspruch 1, **dadurch gekennzeichnet, daß** die Aufnahme (24) eine Kunststoff- oder Metallplatte aufweist.

3. Gassackmodul nach Anspruch 1 oder 2, **dadurch gekennzeichnet, daß** die Aufnahme (24) einen Scharnierbereich (32) und einen Schwenkabschnitt (34) aufweist, auf dem die aktivierbare Einheit (26) befestigt ist.

4. Gassackmodul nach einem der vorhergehenden Ansprüche, **dadurch gekennzeichnet, daß** die Abströmeinrichtung (18) an einem starren Bauteil des Gassackmoduls (14) angeordnet ist.

5. Gassackmodul nach einem der Ansprüche 1 bis 3, **dadurch gekennzeichnet, daß** die Abströmeinrichtung (18) an einer Wand des Gassacks (12) angeordnet ist.

6. Gassackmodul nach Anspruch 5, **dadurch gekennzeichnet, daß** bestimmte Bereiche des an die Abströmeinrichtung (18) angrenzenden Gassackgewebes geschwächt sind.

7. Gassackmodul nach Anspruch 6, **dadurch gekennzeichnet, daß** die geschwächten Bereiche so auf die aktivierbare Einheit (26) abgestimmt sind, daß bei Aktivierung der Einheit (26) das Gassackgewebe in den geschwächten Bereichen aufreißt.

8. Gassackmodul nach Anspruch 3 und einem der Ansprüche 6 oder 7, **dadurch gekennzeichnet, daß** die geschwächten Bereiche nur auf einer Seite des Scharnierbereichs (32) vorgesehen sind.

9. Gassackmodul nach einem der Ansprüche 6 bis 8, **dadurch gekennzeichnet, daß** die geschwächten Bereiche durch Austrittsöffnungen (36) gebildet sind.

10. Gassackmodul nach Anspruch 9, **dadurch gekennzeichnet, daß** die Austrittsöffnungen (36) so gestaltet sind, daß sich der effektive Querschnitt der Austrittsöffnungen (36) bei steigendem Innendruck des Gassacks (12) vergrößert.

11. Gassackmodul nach einem der vorhergehenden Ansprüche, **dadurch gekennzeichnet, daß** elektrische Zuleitungen (28), mit denen die Abströmeinrichtung (18) mit der Steuerung (19) verbunden ist, in das Gassackgewebe integriert sind.

12. Gassackmodul nach einem der vorhergehenden Ansprüche, **dadurch gekennzeichnet, daß** die aktivierbare Einheit (26) eine pyrotechnische Einheit ist.

13. Gassackmodul nach einem der Ansprüche 1 bis 11, **dadurch gekennzeichnet, daß** die aktivierbare Einheit (26) ein elektrorheologisches Fluid aufweist.

14. Gassackmodul nach einem der Ansprüche 1 bis 11, **dadurch gekennzeichnet, daß** die aktivierbare Einheit (26) ein Elektrolyt aufweist.

15. Gassackmodul nach einem der vorhergehenden Ansprüche, **dadurch gekennzeichnet, daß** die Abströmeinrichtung (18) eine vormontierbare Baueinheit ist.
